Europäisches Patentamt

European Patent Office

Office européen des brevets

(19)

(11) Veröffentlichungsnummer: **0 039 391**
A2

(12) # EUROPÄISCHE PATENTANMELDUNG

(21) Anmeldenummer: **81101244.2**

(22) Anmeldetag: **21.02.81**

(51) Int. Cl.³: **B 64 D 1/02**

(30) Priorität: **02.05.80 DE 3016925**

(43) Veröffentlichungstag der Anmeldung: **11.11.81**
Patentblatt 81/45

(84) Benannte Vertragsstaaten: **FR GB IT NL**

(71) Anmelder: **DORNIER GMBH, Postfach 1420,
D-7990 Friedrichshafen (DE)**

(72) Erfinder: **Minkler, Bernd, Finkenstrasse 6,
D-7991 Oberteuringen (DE)**

(74) Vertreter: **Landsmann, Ralf, Dipl.-Ing., Kleeweg 3,
D-7990 Friedrichshafen 2 (DE)**

(54) Starteinrichtung zum Tragen und Starten von Flugkörpern, insbesondere für Luftfahrzeuge.

(57) Einrichtung zum Tragen und Starten von Flugkörpern, insbesondere von Luftfahrzeugen aus, wobei die Einrichtung flugzeugfeste Führungsschienen (10) und in diese eingreifende Klauen (20) am Flugkörper (4) enthält.

Die vom Flugkörper (4) mitgeführten Klauen (20) erhöhen das Flugkörpergewicht und erzeugen zusätzlichen Luftwiderstand. Daher sind die Klauen (20) lösbar mit dem Flugkörper (4) verbunden. Dazu besteht in Richtung der Führungsschienen (10) zwischen den Klauen (20) und dem Flugkörper (4) eine lösbare Reibschlussverbindung (32, 23, 23'). Für die Trennung der Klauen (20) vom Flugkörper (4) ist flugzeugfest eine in den Klauen (20) angreifende Bremseinrichtung (50) vorhanden.

DORNIER GMBH

7990 Friedrichshafen

## Starteinrichtung zum Tragen und Starten von Flugkörpern, insbesondere für Luftfahrzeuge

Die Erfindung betrifft eine Einrichtung zum Tragen und Starten von Flugkörpern, insbesondere für Luftfahrzeuge, mit Führungsmitteln in Form von Führungsschienen und in diese eingreifende, den Flugkörper tragende Führungsklauen.

Die Starteinrichtungen der genannten Art sind so ausgebildet, daß die Führung des Flugkörpers mittels der Führungsschiene und der in diese eingreifenden Führungsklauen vom Zünden des Flugkörpertriebwerkes bis zum Lösen des Flugkörpers von der Starteinrichtung eine einwandfreie Führung bzw. Ausrichtung, z.B. von Zielsucheinrichtungen, gewährleistet. Die zugehörige Entriegelungseinrichtung bewirkt dann die Trennung des Flugkörpers von der Führung am Trägerflugzeug, wobei die Entriegelungseinrichtung aus Teilen besteht, die sowohl am Flugkörper als auch an der Starteinrichtung vorgesehen sind.

Bei bisher bekannten Einrichtungen der genannten Art, verbleiben die in die Führungsschienen eingreifenden Führungsklauen

0039391

auch nach dem Start am Flugkörper. Durch eine solche Ausbildung ergeben sich jedoch Schwierigkeiten hinsichtlich des Flugkörpergewichtes, in Bezug auf den Luftwiderstand, der durch die in der Strömung liegenden Klauen bzw. Teile derselben hervorgerufen wird, bzw. den Raumbedarf bei in den Flugkörper versenkbarer Anordnung der Klauen.

Aufgabe der vorliegenden Erfindung ist es, eine Starteinrichtung zu schaffen, bei der die Außenkontur des Flugkörpers, in Bezug auf eine einwandfreie, widerstandsarme Umströmung in die Strömung ragende Befestigungs- bzw. Führungsteile, nicht aufweist. Ferner ist es Aufgabe der Erfindung, das Gewicht des Flugkörpers durch eine besondere Ausbildung der Befestigungs- bzw. Führungsteile zu reduzieren.

Die gestellte Aufgabe ist erfindungsgemäß dadurch gelöst, daß

a) die Führungsklauen sowohl in den Führungsschienen mit dem Flugkörper gegenüber der flugzeugfesten Einrichtung in Flugrichtung als auch gegenüber dem von ihnen getragenen Flugkörper in Richtung zum Flugkörperheck relativ verstellbar sind, daß

b) zwischen den Führungsklauen und dem Flugkörper sowohl eine lösbare, formschlüssige Verbindung als auch eine reibschlüssige Verbindung besteht und daß

c) für die Führungsklauen an der Einrichtung eine Abbremseinrichtung vorgesehen ist.

Eine so ausgebildete Starteinrichtung vermeidet, daß der Flugkörper Teile der Befestigungs- und Führungseinrichtung, die

0039391

für die Durchführung seiner Mission nicht erforderlich sind, mitführt. Die gesamte Einrichtung arbeitet dabei nach dem Zünden des Triebwerkes des Flugkörpers ohne eine, durch eine Bedienungsperson zu betätigende Steuerung unter Ausnutzung des Triebwerksschubes.

In weiterer Ausgestaltung der Erfindung nach dem Haupterfindungsgedanken besteht ein Merkmal darin, daß der Zentralbolzen unter der Wirkung der Federn nach Trennung von der Klaue selbsttätig in einen Einfahrraum am Flugkörper bündig mit dessen Knontur einfahrbar ist. Mit dieser Ausbildung wird erreicht, daß auch die Zentralbolzen nicht in die Strömung ragen, wobei für deren Einfahren in Räume der Flugkörperstruktur nur ein äußerst geringer Aufwand an Bauteilen erforderlich ist.

Es ist ferner ein Merkmal der Erfindung, daß die Abbremseinrichtung Bremsschienen aufweist, die auf die Führungsklauen mit vorbestimmter Anpresskraft einwirken. Durch diese Anordnung wird mit geringem Aufwand ein Abbremsen sämtlicher vorgesehener Klauen im Bereich des vorderen Teiles der Starteinrichtung mit einer gegen Null gehenden Verzögerung der Bewegung gegenüber der Starteinrichtung bewirkt.

In der Zeichnung ist ein nachfolgend beschriebenes Ausführungsbeispiel dargestellt.

Fig. 1 zeigt in schematischer Darstellung ein Trägerflugzeug mit Starteinrichtung und Flugkörper, in einer Stirnansicht,

Fig. 2 zeigt ebenfalls in schematischer Darstellung in einer Seitenansicht den vorderen Abschnitt der Starteinrichtung und des Flugkörpers, teilweise im Längsschnitt,

Fig. 3 zeigt den Flugkörper und die Starteinrichtung in einer Ansicht von vorn,

Fig. 4 zeigt einen Querschnitt durch die Starteinrichtung nach der Linie IV-IV der Fig. 2,

Fig. 5 zeigt einen Querschnitt durch die Starteinrichtung nach der Linie V-V der Fig. 2,

Fig. 6 zeigt in einem Ausschnitt aus Fig. 2 eine Einzelheit der Verriegelung.

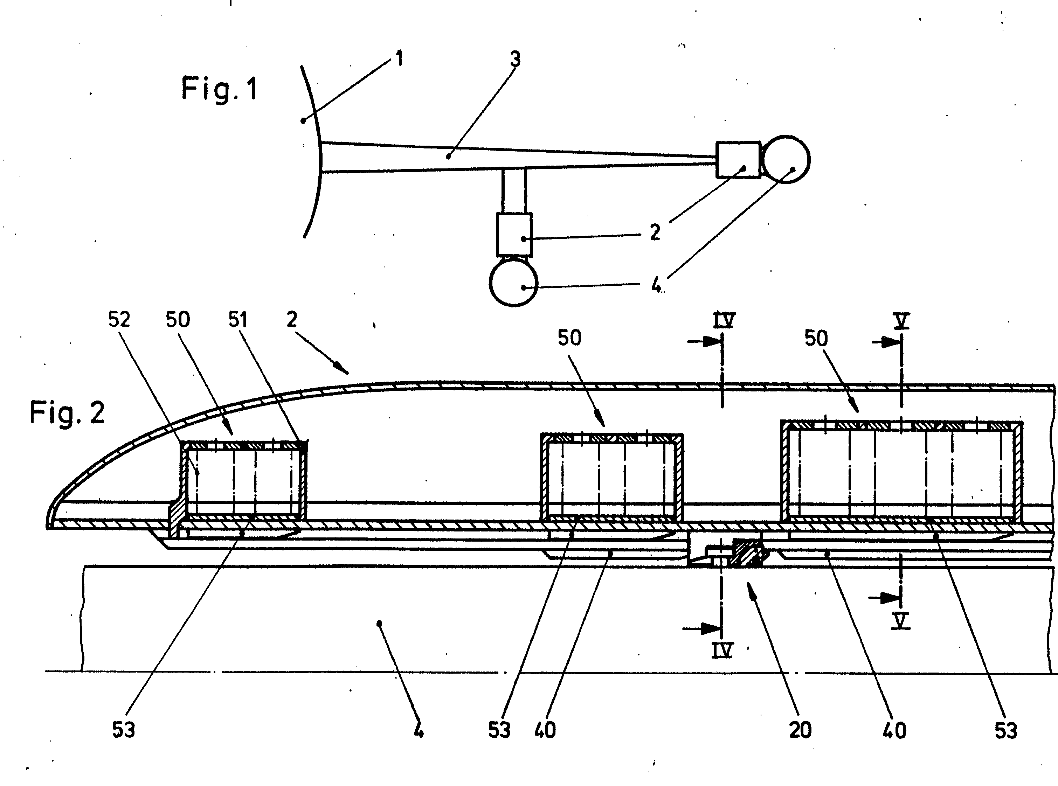

Wie die Fig. 1 erkennen läßt, kann die Starteinrichtung 2 z.B. an den Enden oder alternativ unterhalb der Tragflügel 3 des Trägerflugzeuges 1 angeordnet sein und dient zur Aufnahme des allgemein mit 4 bezeichneten Flugkörpers.

Nach den Fig. 2 bis 6 sind für die Befestigung des Flugkörpers 4 an der Einrichtung 2 während des Tragfluges zum Einsatzort, bzw. die Führung des Flugkörpers während seiner Startphase, Führungen bzw. Halterungen und entsprechende Verriegelungen vorgesehen. Dazu ist mit der Einrichtung 2 eine Führungsschiene 10 verbunden, die sich in Richtung der Flugzeuglängsachse über den größten Teil der Länge der Starteinrich

richtung erstreckt. Die Führungsschiene 10 weist zwei zueinander parallele Seitenwände 11 bzw. 12 auf, die an ihren Enden aufeinander zugerichtete Längsvorsprünge 13 bzw. 14 besitzen. Die Längsvorsprünge 13, 14 bilden an ihrer Innenseite Führungsflächen 15 bzw. 16 für die Auflage von Führungsklauen 20, die in nachfolgend noch näher beschriebener Weise den Flugkörper 4 aufnehmen. Es sind für die Aufnahme und Führung des Flugkörpers 4 an der Einrichtung 2 drei auf die Flugkörperlänge verteilt angeordnete Führungsklauen 20 vorgesehen. Zur Befestigung bzw. Führung des Flugkörpers 4, weisen die Führungsklauen 20 voneinander weggerichtete Vorsprünge 21 bzw. 22 auf, die mit ihren Flächen 15' bzw. 16' auf den Flächen 15, 16 der Führungsschiene 10 aufliegen. Ihre seitliche Führung erhalten die Führungsklauen 20 durch parallele Seitenwände 11' bzw. 12' an der Führungsschiene 10. Die formschlüssige Verbindung jeder der Klauen 20 mit dem Flugkörper 4 wird hergestellt durch einen Zentralbolzen 24, der mit seinem Schaft 25 durch eine entsprechende Bohrung 25' in der verstärkten Wandstruktur 27 des Flugkörpers 4 hindurchragt und über eine vorgespannte Druckfeder 26 die Klaue 20 gegen die Flugkörperstruktur 27 verspannt. Die Führungsklauen 20 liegen mit ihren Flächen 23 auf der Außenfläche 23' der Flugkörperstruktur 27 auf.

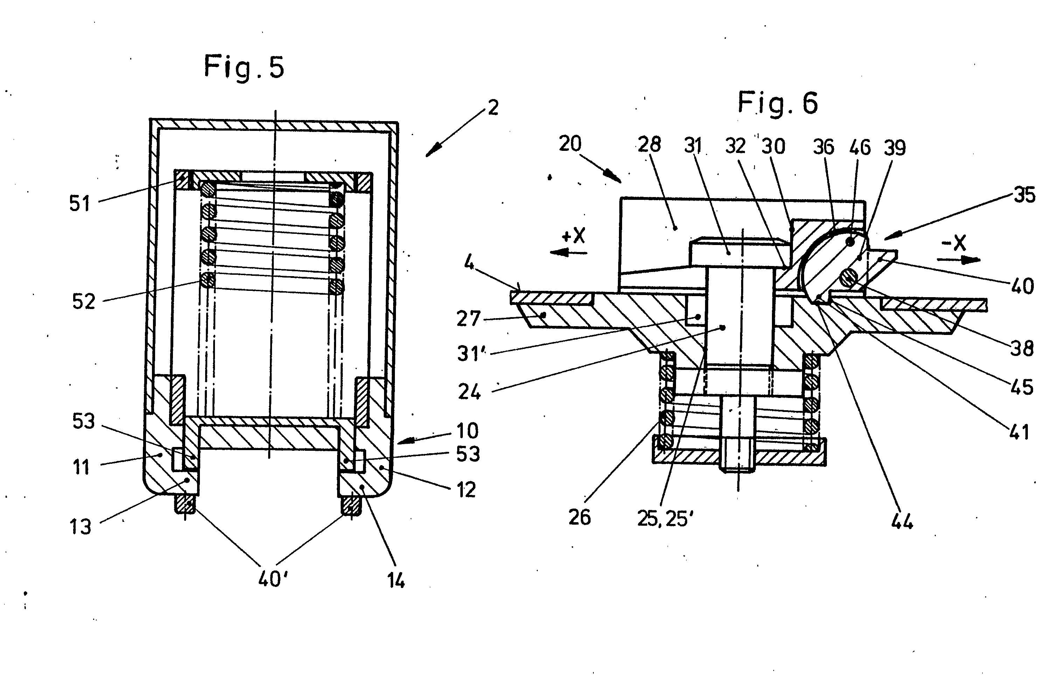

Wie Fig. 6 zeigt, ist in die Klaue 20 eine sich in Richtung der Führungsschiene 10 erstreckende, in Flugrichtung + X des des Flugkörpers 4 offene, jedoch in der entgegengesetzten Richtung -X abgeschlossene Vertiefung 28 eingearbeitet, so daß eine Abstützfläche 30 gebildet ist. Der Zentralbolzen 24 weist an seinem oberen Ende einen Bund 31 auf, der in die Ausnehmung 31' der Flugkörperstruktur 27 paßt. Der Zentralbolzen 24 ist dafür vorgesehen, auf einem Vorsprung 32 in der Vertiefung 28 der Klaue 20 zeitweilig aufzuliegen, was später noch näher erläutert ist.

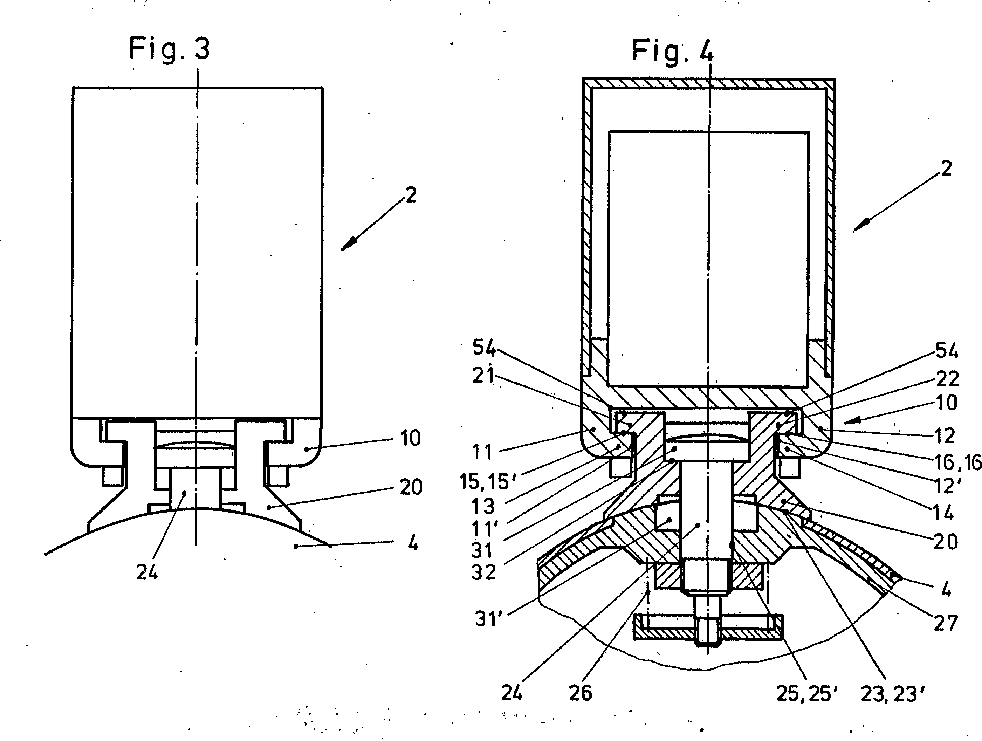

Die Klauen tragen ferner je eine Verriegelungseinrichtung 35 für die Verriegelung mit dem Flugkörper 4. Dazu ist in einen Schlitz 36 der Klaue 20 eine um eine Achse 38 drehbare, federbelastete Nockenscheibe 39 eingesetzt, wobei diese Scheibe je einen Schalt- und einen Sperrnocken 40, 41 aufweist. Der Sperrnocken 41 ist vorgesehen für den Eingriff in eine Vertiefung 44 in der Flugkörperstruktur zur Bildung einer Anschlagfläche 45, so daß die Klaue 20 in Richtung -X, d. h. zum Flugkörperheck durch den Sperrnocken 41 arretierbar ist. Die Nockenscheibe 39 ist in ihrer Verriegelungsstellung durch einen Scheerstift 46 gesichert. Für die Entriegelung sind beidseitig an der Führungsschiene 10 Schaltvorsprünge 40' vorgesehen, auf die die seitlich überragende Schaltnocke 40 bei Bewegung der Klaue 20 aufläuft, wobei die Nockenscheibe 39 unter Abscheerung des Stiftes 46 um ihre Achse gedreht und durch eine hier nicht dargestellte Drehfeder in ihrer Freigabestellung gehalten wird. Zum Abbremsen der in der Führungsschiene 10 laufenden Führungsklauen 20 sind, wie Fig. 2 erkennen läßt, Abbremseinrichtungen 50 an der Einrichtung 2 angeordnet. Die Einrichtungen 50 bestehen je aus einem an der Starteinrichtung 2 festen Gehäuse 51, einer sich am Gehäuse abstützenden Druckfeder 52 und einer Doppelbremsschiene 53, die sich mittels der Feder 52 unter einer
vorbestimmten Anpresskraft gegen die Abbremsfläche 54 (Fig. 4)
der Führungsklauen 20 zum Abbremsen anlegt.

Die Wirkungsweise des beschriebenen Ausführungsbeispiels ist
wie folgt:
Nach dem Zünden des Triebwerks des Flugkörpers 4 wirkt der
Triebwerksschub über den Zentralbolzen 24 in einer der Führungsklauen 20 auf eine hier nicht näher beschriebene zentrale
Flugkörperverriegelung an der Starteinrichtung 2. Durch die
Schubwirkung des Flugkörpertriebwerks wird die Flugkörperverriegelung entriegelt und der Flugkörper 4 führt eine Relativbewegung gemeinsam mit den Führungsklauen 20 in der diesen gemeinsamen Führungsschiene 10 gegenüber der Starteinrichtung 2
in Flugrichtung +X des Flugkörpers 4 aus. Nach Zurücklegung
eines vorbestimmten Relativweges des Flugkörpers 4 gegenüber
der Starteinrichtung 2 wird die Klauenverriegelung 35 der Führungsklauen 20 durch Auflaufen der Schaltfläche des Schaltnockens 40 auf die Gegenfläche an den führungsschienenfesten
Schaltvorsprüngen 40' durch Drehen der Nockenscheibe 39 um
ihre Achse 38 unter Abscheerung des Scheerstiftes 46 gelöst.
Dabei kommt die Sperrnocke 41 außer Eingriff mit ihrer Anschlagfläche 45 in der Vertiefung 44 der Flugkörperstruktur 27.
Dadurch ist die formschlüssige Verbindung zwischen der Führungsklaue 20 und dem Flugkörper 4 in Richtung -X auf das

0039391

Flugkörperheck gelöst.In Bezug auf den nachfolgend beschriebenen Abtrennvorgang der Klauen 20 vom Flugkörper 4, besteht die Verbindung jetzt nur noch durch den Reibschluß zwischen dem flugkörperfesten Zentralbolzen 24 und dem Vorsprung 32 der Führungsklauen 20 mit ihren Flächen 23 auf der Auflagefläche 23' der Flugkörperstruktur 27. Die Führungsklauen 20 werden gleichzeitig durch die Abbremseinrichtung 50 mittels der federbelasteten Bremsschiene 53 in einer Bewegung gegenüber der Einrichtung 2 abgebremst, so daß einerseits durch Überwindung des Reibschlusses eine Trennung der Klauen 20 vom Flugkörper 4 in Richtung -X zum Flugkörperheck und andererseits eine gegen Null gehende Verzögerung der Bewegung der Klaue 20 bewirkt wird. Die fortdauernde Schubeinwirkung auf den Flugkörper 4 wird durch diesen Vorgang nur unwesentlich beeinflußt. Die Klauen 20 verbleiben damit an der Einrichtung 2 in der Führungsschiene 10. Bei diesem Vorgang hat der flugkörperfeste Zentralbolzen 24 die in Flugrichtung +X offene Vertiefung 28 der Klauen 20 verlassen. Der Zentralbolzen 24 wird danach durch die Druckfeder 26 mit seinem Bund 31 in eine entsprechende Ausnehmung 31' in der Flugkörperstruktur 27 oberflächenbündig eingezogen. Während der weiteren Startphase wird der Flugkörper 4 durch die übrigen Führungsklauen an der Führungsschiene 10 geführt.

Nachfolgend lösen sich die übrigen Klauen 20 in der gleichen, wie vorangehend beschriebenen Weise ausgehend von der vordersten zur hintersten Klaue.

Patentansprüche:

1. Einrichtung zum Tragen und Starten von Flugkörpern, insbesondere für Luftfahrzeuge mit Führungsmitteln in Form von Führungsschienen und in diese eingreifende, den Flugkörper tragende Führungsklauen, dadurch gekennzeichnet, dass

   a) die Führungsklauen (20) sowohl in den Führungsschienen (10) mit dem Flugkörper (4) gegenüber der flugzeugfesten Einrichtung in Flugrichtung als auch gegenüber dem von ihnen getragenen Flugkörper (4) in Richtung zum Flugkörperheck relativ verstellbar sind, dass

   b) zwischen den Führungsklauen (20) und dem Flugkörper (4) sowohl eine lösbare, formschlüssige Verbindung (35, 39, 41, 44, 45) als auch eine reibschlüssige Verbindung (32, 23, 23') besteht und dass

   c) für die Führungsklauen (20) an der Einrichtung (2) eine Abbremseinrichtung (50 vorgesehen ist.

2. Einrichtung nach Anspruch 1, dadurch gekennzeichnet, dass die Verbindung (35) zwischen den Klauen (20) und dem Flugkörper (4) Formschluss herstellende Eingriffsglieder (39, 41, 44, 45) enthält, die mittels Schaltnocken (40) an den Klauen (20) bzw. führungsschienenfester Schaltvorsprünge (40') an der Einrichtung (2) im Sinne einer Entriegelung betätigbar sind.

3. Einrichtung nach Anspruch 1 oder 2, dadurch gekennzeichnet, dass die reibschlüssige Verbindung zwischen Flugkörper (4) und Führungsklauen (20) nach dem Entriegeln der Eingriffsglieder (39, 41, 44, 45) durch einen Zentralbolzen (24) hergestellt und der Zentralbolzen (24) unter Überwindung des Reibschlusses gegenüber der Klaue (20) in Flugkörperflugrichtung (+ X) beweglich ist.

4. Einrichtung nach Anspruch 1 bis 3, dadurch gekennzeichnet, dass der Zentralbolzen (24) unter der Wirkung der Federn (26) nach Trennung von der Klaue (20) selbsttätig in einen Einfahrraum (31') am Flugkörper (4) bündig mit dessen Kontur einfahrbar ist.

5. Einrichtung nach Anspruch 1 bis 4, dadurch gekennzeichnet, dass die Abbremseinrichtung (50) Bremsschienen (53) aufweist, die auf die Führungsklauen (20) mit vorbestimmter Anpresskraft einwirken.

**Fig. 1**

1  3  2  4

**Fig. 2**

52  50  51  2  50  IV  50  V

IV  V

53  53 40  20 40 53

4

2/3

0039391

0039391

Fig. 4

Fig. 3

## Fig. 5

51
52
53
11
13
40'
10
53
12
14

2

## Fig. 6

20  28  31  32  30  36  46  39

+X  -X

35
40
38
45
41
44

4
27
31'
24
26  25, 25'

0039391